# EUROPEAN PATENT APPLICATION

(11) **EP 1 757 341 A1**
(43) Date of publication of application: **28.02.2007**
(21) Application number: 05739190.6
(22) Date of filing: 10.05.2005
(51) Int. Cl.: A63F 13/00

(54) **GAME DEVICE, GAME CONTROL METHOD, INFORMATION RECORDING MEDIUM, AND PROGRAM**

(30) Priority: 11.05.2004 JP 2004140694
(71) Applicant: Konami Digital Entertainment Co., Ltd., Tokyo 106-6114 (JP)
(72) Inventor: FUJII, Daisuke, c/o KONAMI DIGITAL ENTER. Co.,Ltd., Tokyo 106-6114 (JP)
(74) Representative: Rüger, Barthelt & Abel Patentanwälte
(86) International application number: PCT/JP2005/008526
(87) International publication number: WO 2005/107905

(57) **Abstract**

In a game device (301) suitable for showing a past operation history to a player in comparison with the current operation status, an input receiving unit (302) receives a moving instruction input from the player, a first moving unit (303) moves a first object by the moving instruction input, an input history storage unit (304) stores the history of the moving instruction input in the current play, a second moving unit (305) moves a second object by the history of a moving instruction input in a past play, a passage history storage unit (306) stores an elapsed time at which a given sign is passed in the current play, a difference obtaining unit (307) obtains an elapsed time at which that sign was passed in the history of passage in a past play and obtains the difference between both the elapsed times, and a display unit (308) displays the second object at a transparency degree pre-associated with the obtained difference.

## Description

### Technical Field

The present invention relates to a game device and game control method suitable for showing a past operation history to a player in comparison with the current operation status, a computer-readable information recording medium storing a program for realizing these on a computer, and the program.

### Background Art

Conventionally, there has been proposed a game technique for allowing a player to operate, by using a controller, a vehicle of any type such as a motorcycle, a car, an airplane, etc., or a character who runs or jumps on the ground, flies across the sky, or swims in the water (hereinafter referred to as "object" collectively) in a virtual space such as a two-dimensional plane or a three-dimensional space, etc. to move the object in the virtual space and fight a competition. Such a game technique is disclosed in, for example, the literature indicated below.
Patent Literature 1: Unexamined Japanese Patent Application KOKAI Publication No. H11-114222

A "ghost" technique has been proposed for such a game device, for showing to the player in an easy-to-understand manner whether his/her current operation has improved, compared from his/her past records.

A game device employing the ghost technique records the history of the player's operation for each play. Assuming that the session from the start of the game till its end is called "mission", the game device determines the achievement of the player in the mission each time a mission ends, and if the achievement has improved, adopts and records the history of the achievement as the history of the mission with the highest achievement. Then, in the next play, the game device uses the history of the mission with the highest generation as if it were operation inputs by the controller from another player.

This makes it possible to compete with the "past self". The object operated by the "past self' is called "ghost", or called "ghost car" in case of a car race game.

Unlike an ordinary opponent, a ghost does not collide with the object operated by the player him/herself, though does overlap with it. The so-called "collision determination" or "hit determination" does not function. Hence, such an attempt has also been made to display the ghost semi-transparently, in order to distinguish the ghost from other opponents.

### Disclosure of Invention

### Problem to be Solved by the Invention

However, various techniques for showing the difference in the achievement between the ghost and the current player to the player in an easy-to-understand manner are strongly demanded.

The present invention was made to solve the above-described problem, and an object of the present invention is to provide a game device and game control method suitable for showing a past operation history to a player in comparison with the current operation status, a computer-readable information recording medium storing a program for realizing these on a computer, and the program.

### Means for Solving the Problem

To achieve the above object, the following invention will be disclosed according to the principle of the present invention.

A game device according to a first aspect of the present invention comprises an input receiving unit, a first moving unit, an input history storage unit, a second moving unit, a difference obtaining unit, and a display unit, which are configured as follows.

Here, the input receiving unit receives a moving instruction input for instructing to move a first object in a virtual space.

Typically, a controller comprised in the game device functions as the input receiving unit, and the first object constitutes an object such as a car, a motorcycle, an airplane, characters of various types, etc. (so-called "my car" or "player character", hereinafter timely referred to as "user's character") whose movement is determined by the operations of the player.

The first moving unit moves the first object in the virtual space, by the moving instruction input received by the input receiving unit.

A simple two-dimensional plane is employed as the virtual space for a simplest race game, but a two-dimensional plane having ups and downs may be employed for a car race, a motorcycle race, a horse race, a bicycle race, etc. Further, for a race of airplanes, helicopters, flying characters, etc., a race of submarines in the water, a race of rockets in the cosmos, etc., a three-dimensional space is employed as a virtual space. Various game techniques may be used for the operation system of the user's character in the virtual space.

Further, the input history storage unit stores the moving instruction input received by the input receiving unit as input history information.

Operational statuses of the controller at a given time, for example, the strength to press the buttons of the controller, the inclination of the lever, etc. are considered as the moving instruction input to be recorded as the input history information. As will be described later, since it is necessary to reproduce the current mission (or one with the highest achievement) by controlling the ghost to move by using the input history information, it is necessary to store all the parameters used by the first moving unit for moving the user's character.

Then, the second moving unit moves a second object in the virtual space, by a moving instruction input stored in a past in the input history storage unit.

As described above, the second moving unit is configured almost the same as the first moving unit, but is different in that the second moving unit receives input history information while the first moving unit receives the operation instruction input of the player. Since the input history information includes all of the various parameters used by the first moving unit, the second object (hereinafter timely referred to as "ghost") reproduces the behavior of the user's character in a past mission, by means of the second moving unit.

Meanwhile, the passage history storage unit stores an elapsed time at which the first object passes each of a plurality of signs arranged in the virtual space, as passage history information.

For example, in case of a car race game, since the start of a mission corresponds to the departure of the car from the start line and the end of the mission corresponds to the arrival at the goal in time after some rounds on the course, the position of the car can be identified by the "distance" from the start line, unless the car goes greatly astray from the course. Hence, the signs are placed so as to cross the course (so as to be substantially perpendicular to the direction in which the car advances) at substantially equal intervals. Each time the user's character passes a sign, the time that has elapsed since the start of the mission is recorded in association with that sign.

Typically, the signs are assigned numbers in an order in which the signs are (assumed to be) passed by the user's character from the start of the mission till the end of the mission, and it is typical to record a time which has elapsed since the start of the mission and at which a sign assigned a given number is passed at an element having that number in a given array, to make the passage history information. In this case, since a sign in an "n-th round" and a sign in an "m-th" round, though they are at the same position, are different in the order in which they are assumed to be passed, they are treated as different signs.

Further, the difference obtaining unit obtains an elapsed time at which the second object passes a sign from passage history information stored in a past in the passage history storage unit each time the first object passes each of the plurality of signs, and obtains a difference between the elapsed time of the first object and the elapsed time of the second object.

That is, each time the user's character passes a sign, the difference obtaining unit obtains the record of the elapsed time at which the ghost passes that sign. For that whose behavior is reproduced as a ghost, since the elapsed time at which each sign was passed in the past play is recorded as the passage history information as described above, it is possible to obtain the elapsed time at which the ghost is to pass the sign even if the ghost has not yet passed that sign in the current mission.

In a race game, in a case where the elapsed time of the user's character is shorter than the elapsed time of the ghost, this means that the ghost has not yet arrived at that sign and the user's character is preceding, it is possible to determine that the achievement is better in the current mission. Further, in a reverse case to this, since the ghost is preceding, the ghost is arranged ahead of the user's character.

Then, the display unit displays the second object in the virtual space at a transparency degree pre-associated with the difference obtained by the difference obtaining unit.

A method of displaying a ghost semi-transparently has been already proposed as described above, but the present invention is for determining the transparency degree to render it semitransparent, from the difference in the elapsed time of the user's character and of the ghost. Here, the transparency degree is a value associated with a so-called "α value". The α value, in case of it being 0, means that it is completely achromatic and allows transmission of all the background colors through it, while in case of it being 1, means that it is completely opaque and does not at all allow transmission of the background colors.

The present invention makes it possible to reproduce the operation history (typically, with the highest achievement) of the past self of the player(or another person) as the ghost, and to easily determine whether or not the achievement improves even during the play, by seeing the transparency degree of the ghost.

In the game device according to the present invention, pre-association may be made such that as an absolute value of the difference obtained by the difference obtaining unit increases, the transparency degree decreases.

As described above, typically, collision determination is not performed between the user's character and the ghost. Therefore, in a case where the achievement of the ghost and the achievement of the user's character are almost the same, the ghost and the user's character overlap in the most part. In such a case, it might become hard to observe the state of the external world and the state of the other opponents, because only the ghost is displayed (though semi-transparently) on the screen. Meanwhile, in a case where the achievements differ (particularly, in a case where the ghost precedes), it is often desired that the ghost can be observed well because it might be desired to see the ghost as an objective.

According to the present invention, since the ghost is displayed more transparently by increasing the transparency degree in a case where the elapsed times of the user's character and the ghost are similar while the ghost is displayed more clearly by reducing the transparency degree in a case where the elapsed times differ, it is possible to show the ghost and objects other than the ghost to the player in an easy-to-observe manner, depending on the situations.

In the game device according to the present invention, the display unit may be configured to further display the second object in the virtual space by shifting a hue thereof by an amount pre-associated with the difference obtained by the difference obtaining unit.

That is, the hue of the ghost is changed, depending on the difference between the elapsed times of the ghost and of the user's character. Though it is typical that the hue change is increased as the difference is greater (as the achievements differ more greatly), it is also possible to employ an inverse association.

According to the present invention, it becomes possible to show the current difference between the achievements of the ghost and of the user's character to the player in an easy-to-understand manner, by the changes of the hue of the ghost.

In the game device according to the present invention, pre-association may be made such that a direction in which the amount of the hue is shifted changes when the difference obtained by the difference obtaining unit changes from positive to negative.

For example, in a case where the ghost precedes the user's character, i.e., in a case where the elapsed time of the ghost is shorter than the elapsed time of the user's character, the difference is positive if a plain subtraction is performed, while in a case where the user's character precedes the ghost, the difference is negative. Hence, for example, the hue is shifted in a redder direction in a case where the difference is a positive value, and the hue is shifted in a bluer direction in a case where the difference is a negative value. Also in this case, the ghost is displayed semi-transparently.

According to the present invention, it becomes possible to show to the player in an easy-to-understand manner whether the user's character precedes or the ghost precedes, by the change of the hue of the ghost.

In the game device of the present invention, the display unit may be configured to use, as a position at which the second object is to be displayed, a position at which the second object is when seen from a viewpoint which moves in the virtual space in conjunction with the first object.

This is for displaying how the external world is seen from a camera, which is one of the preferred embodiments of the present invention and which moves together with the user's character. This corresponds to capturing the external world from a vehicle-mounted camera in a car race and displaying it, or to displaying a virtual three-dimensional space on a two-dimensional screen by three-dimensional graphics techniques.

Particularly, according to the present invention, it is possible to make the difference in the achievement with respect to the ghost easy to see by rendering the ghost semitransparent and changing its transparency degree and the shift amount of its hue, and to prevent the states, etc. of the other opponents and obstacles in the external world from being impossible to see due to the existence of the ghost, thereby making it possible to provide the player with a fine environment for playing a game.

A game control method according to another aspect of the present invention controls a game device comprising an input receiving unit, a first moving unit, an input history storage unit, a second moving unit, a passage history storage unit, a difference obtaining unit, and a display unit, and comprises an input receiving step, a first moving step, an input history storing step, a second moving step, a passage history storing step, a difference obtaining step, and a displaying step, which are configured as follows.

That is, at the input receiving step, the input receiving unit receives a moving instruction input for instructing to move a first object in a virtual space.

Meanwhile, at the first moving step, the first moving unit moves the first object in the virtual space, by the moving instruction input received at the input receiving step.

Further, at the input history storing step, the moving instruction input received at the input receiving step is stored in the input history storage unit as input history information.

At the second moving step, the second moving unit moves a second object in the virtual space, by a moving instruction input stored in a past in the input history storage unit as input history information.

Meanwhile, at the passage history storing step, an elapsed time at which the first object passes each of a plurality of signs arranged in the virtual space is stored in the passage history storage unit as passage history information.

Further, at the difference obtaining step, the difference obtaining unit obtains an elapsed time at which the second object passes a sign from passage history information stored in a past in the passage history storage unit each time the first object passes each of the plurality of signs, and obtains a difference between the elapsed time of the first object and the elapsed time of the second object.

Then, at the displaying step, the display unit displays the second object in the virtual space at a transparency degree pre-associated with the difference obtained at the difference obtaining step.

A program according to another aspect of the present invention is configured to control a computer to function as the above-described game device, or to control a computer to perform the above-described game method.

The program according to the present invention can be stored on a computer-readable information recording medium such as a compact disk, a flexible disk, a hard disk, a magneto optical disk, a digital video disk, a magnetic tape, a semiconductor memory, etc.

The above-described program can be distributed and sold via a computer communication network, independently from a computer on which the program is executed. Further, the above-described information recording medium can be distributed and sold independently from the computer.

### Effect of the Invention

According to the present invention, it is possible to provide a game device and game control method suitable for showing a past operation history to a player in comparison with the current operation status, a computer-readable information recording medium storing a program for realizing these on a computer, and the program.

### Brief Description of Drawings

[FIG. 1] It is an explanatory diagram showing a schematic structure of a typical information processing device on which a display according to one embodiment of the present invention is realized.
[FIG. 2] It is an exemplary diagram showing a schematic structure of a controller comprised in the information processing device according to one embodiment of the present invention.
[FIG. 3] It is an exemplary diagram showing a schematic structure of a game device according to one embodiment of the present invention.
[FIG. 4] It is a flowchart showing the flow of control of a game control process performed by the game device according to one embodiment of the present invention.
[FIG. 5] It is an explanatory diagram showing the state of history information stored in a RAM.
[FIG. 6] It is an explanatory diagram showing an example of display by the game device according to the present embodiment.
[FIG. 7] It is an explanatory diagram showing an example of display by the game device according to the present embodiment.
[FIG. 8] It is an explanatory diagram showing an example of display by the game device according to the present embodiment.

### Explanation of Reference Numerals

- 100: information processing device
- 101: CPU
- 102: ROM
- 103: RAM
- 104: interface
- 105: controller
- 106: external memory
- 107: image processing unit
- 108: DVD-ROM drive
- 109: NIC
- 110: audio processing unit
- 201: ↑ button
- 202: ↓ button
- 203: ← button
- 204: → button
- 205: ○ button
- 206: × button
- 207: Δ button
- 208: □ button
- 209: SELECT button
- 210: START button
- 211: ANALOG button
- 212: indicator
- 213: joystick
- 214: joystick
- 215: L1 button
- 216: L2 button
- 217: R1 button
- 218: R2 button
- 301: game device
- 302: input receiving unit
- 303: first moving unit
- 304: input history storage unit
- 305: second moving unit
- 306: passage history storage unit
- 307: difference obtaining unit
- 308: display unit
- 331: current input history array
- 332: past input history array
- 333: current passage history array
- 334: past passage history array
- 401: virtual space
- 402: road
- 403: sign
- 701: screen
- 711: ghost

### Best Mode for Carrying Out the Invention

An embodiment of the present invention will be explained below. An embodiment in which the present invention is applied to a game device on which three-dimensional graphics are displayed will be explained below in order to facilitate understanding. However, the present invention can likewise be applied to information processing apparatuses such as computers of various types, PDAs (Personal Data Assistants), portable telephones, etc. That is, the embodiment to be explained below is intended for explanation, not to limit the scope of the present invention. Accordingly, though those having ordinary skill in the art could employ embodiments in which each element or all the elements of the present embodiment are replaced with equivalents of those, such embodiments will also be included in the scope of the present invention.

### Embodiment 1

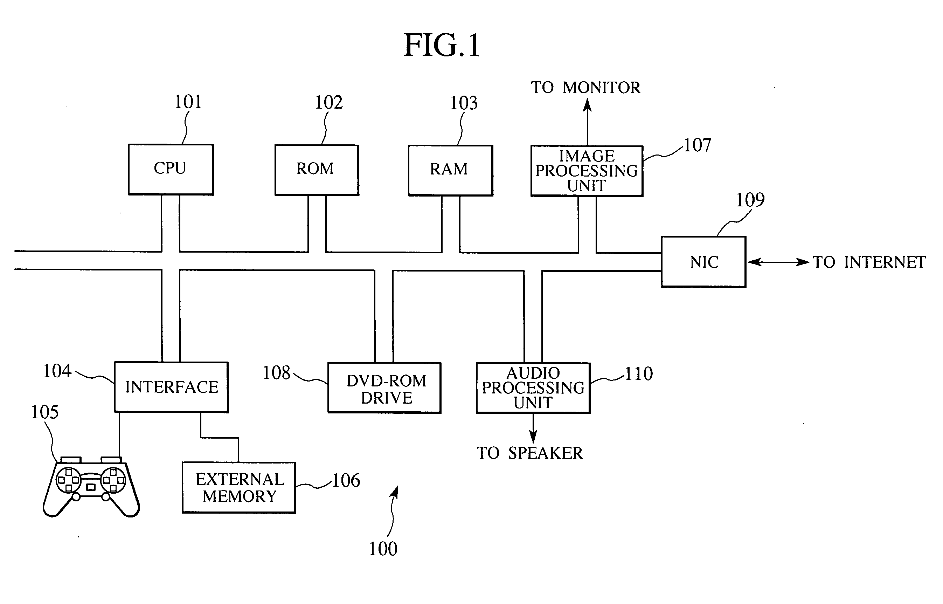

FIG. 1 is an explanatory diagram showing a schematic structure of a typical information processing device on which a display according to the present invention will be realized. The following explanation will be given with reference to this diagram.

An information processing device 100 comprises a CPU (Central Processing Unit) 101, a ROM 102, a RAM 103, an interface 104, a controller 105, an external memory 106, an image processing unit 107, a DVD-ROM drive 108, an NIC (Network Interface Card) 109, and an audio processing unit 110.

By loading a DVD-ROM storing a game program and data onto the DVD-ROM drive 108 and turning on the power of the information processing device 100, the program will be executed and the display according to the present embodiment will be realized.

The CPU 101 controls the operation of the entire information processing device 100, and is connected to each element to exchange control signals and data. Further, by using an ALU (Arithmetic Logic Unit) (unillustrated), the CPU 101 can perform arithmetic operations such as addition, subtraction, multiplication, division, etc., logical operations such as logical addition, logical multiplication, logical negation, etc., bit operations such as bit addition, bit multiplication, bit inversion, bit shift, bit rotation, etc. toward a storage area, or a register (unillustrated), which can be accessed at a high speed. Further, the CPU 101 itself may be designed to be able to rapidly perform saturate operations such as addition, subtraction, multiplication, division, etc. for dealing with multimedia processes, vector operations such as trigonometric function, etc. or may realize these with a coprocessor.

The ROM 102 stores an IPL (Initial Program Loader) to be executed immediately after the power is turned on, execution of which triggers the program stored on the DVD-ROM to be read into the RAM 103 and executed by the CPU 101. Further, the ROM 102 stores a program and various data for an operating system necessary for controlling the operation of the entire information processing device 100.

The RAM 103 is for temporarily storing data and programs, and retains the program and data read out from the DVD-ROM, and other data necessary for game proceedings and chat communications. Further, the CPU 101 performs processes such as securing a variable area in the RAM 103 to work the ALU directly upon the value stored in the variable to perform operations, or once storing the value stored in the RAM 103 in the register, performing operations toward the register, and writing back the operation result to the memory, etc.

The controller 105 connected through the interface 104 receives an operation input given by the user when playing a game such as a racing game, etc.

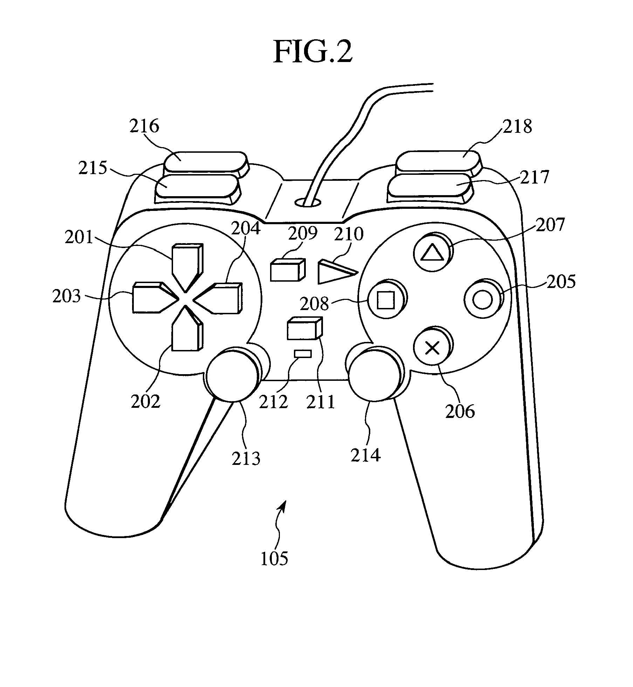

FIG. 2 is an explanatory diagram showing the appearance of the controller 105. The following explanation will be given with reference to this diagram.

Arranged on the left side of the controller 105 are a ↑ button 201, a ↓ button 202, a ← button 203, and a → button 204, which are used for making operation inputs directing upward, downward, leftward, and rightward.

Arranged on the right side are a ○ button 205 used for making a go-ahead operation input, a × button 206 used for making a cancel operation input, a Δ button 207 used for making an instruction input for menu display, etc., and a □ button 208 used for making an instruction input for other purposes.

At the center, an ANALOG button 211 for instructing start or stop of analog input and an indicator 212 for indicating whether analog input is effective or ineffective are arranged, in addition to a SELECT button 209 and a START button 210.

Joysticks 213 and 214 for making instruction inputs having intensity in directions not limited to the upward, downward, leftward, and rightward directions are arranged on the lower center portion.

Further, an L1 button 215, an L2 button 216, an R1 button 217, and an R2 button 218, which can be used for various operation inputs are arranged at the upper portion.

The buttons 201 to 208 and 215 to 218 of the controller 105 are each equipped with a pressure sensor, so that which button is pressed can be detected and the level of the pressure of the user's pressing operation can be obtained in 256 steps of 0 to 255, in a case where analog input is made effective.

The joysticks 213 and 214 of the controller 105 are equipped with a strain gauge, so that in which direction and how much these are bent can be detected.

Returning to FIG. 1, the external memory 106 detachably connected through the interface 104 rewritably stores data indicating the play status (past achievements, etc.) of a racing game, etc., data indicating the progress status of the game, data of chat communication logs (records), etc. The user can store these data on the external memory 106 where needed, by inputting instructions through the controller 105.

The DVD-ROM to be loaded on the DVD-ROM drive 108 stores a program for realizing a game and image data and audio data accompanying the game. Under the control of the CPU 101, the DVD-ROM drive 108 performs a reading process on the DVD-ROM loaded thereon to read out a necessary program and data, which are to be temporarily stored on the RAM 103, etc.

The image processing unit 107 processes the data read out from the DVD-ROM by means of the CPU 101 and an image calculation processor (unillustrated) provided in the image processing unit 107, and thereafter stores the data in a frame memory (unillustrated) provided in the image processing unit 107. The image information stored in the frame memory is converted into a video signal at a predetermined synchronization timing and output to a monitor (unillustrated) connected to the image processing unit 107. Thereby, image displays of various types are available.

The image calculation processor can rapidly perform transparent operations such as overlay operation or α blending of two-dimensional images, and saturate operations of various types.

Further, the image calculation processor can also rapidly perform an operation for rendering, by a Z buffer method, polygon information placed in a virtual three-dimensional space and having various texture information added, to obtain a rendered image of the polygon placed in the virtual three-dimensional space as seen from a predetermined view position along a predetermined direction of sight line.

Further, by the CPU 101 and the image calculation processor working in cooperation, a character string as a two-dimensional image can be depicted on the frame memory, or depicted on the surface of each polygon, according to font information defining the shape of the characters.

The NIC 109 is for connecting the information processing device 100 to a computer communication network (unillustrated) such as the Internet, etc., and comprises a 10BASE-T/100BASE-T product used for building a LAN (Local Area Network), an analog modem, an ISDN (Integrated Services Digital Network) modem, or an ADSL (Asymmetric Digital Subscriber Line) modem for connecting to the Internet by using a telephone line, a cable modem for connecting to the Internet by using a cable television line, or the like, and an interface (unillustrated) for intermediating between these and the CPU 101.

The audio processing unit 110 converts audio data read out from the DVD-ROM into an analog audio signal, and outputs the signal from a speaker (unillustrated) connected thereto. Further, under the control of the CPU 101, the audio processing unit 110 generates sound effects and music data to be sounded in the course of the game, and outputs the sounds corresponding to the data from the speaker.

In a case where the audio data recorded on the DVD-ROM is MIDI data, the audio processing unit 110 refers to the music source data included in the data, and converts the MIDI data into PCM data. Further, in a case where the audio data is compressed audio data of ADPCM format, Ogg Vorbis format, etc., the audio processing unit 110 expands the data and converts it into PCM data. By D/A (Digital/Analog) converting the PCM data at a timing corresponding to the sampling frequency of the data and outputting the data to the speaker, it is possible to output the PCM data as audios.

Aside from the above, the information processing device 100 may be configured to perform the same functions as the ROM 102, the RAM 103, the external memory 106, the DVD-ROM to be loaded on the DVD-ROM drive 108, etc. by using a large-capacity external storage device such as a hard disk, etc.

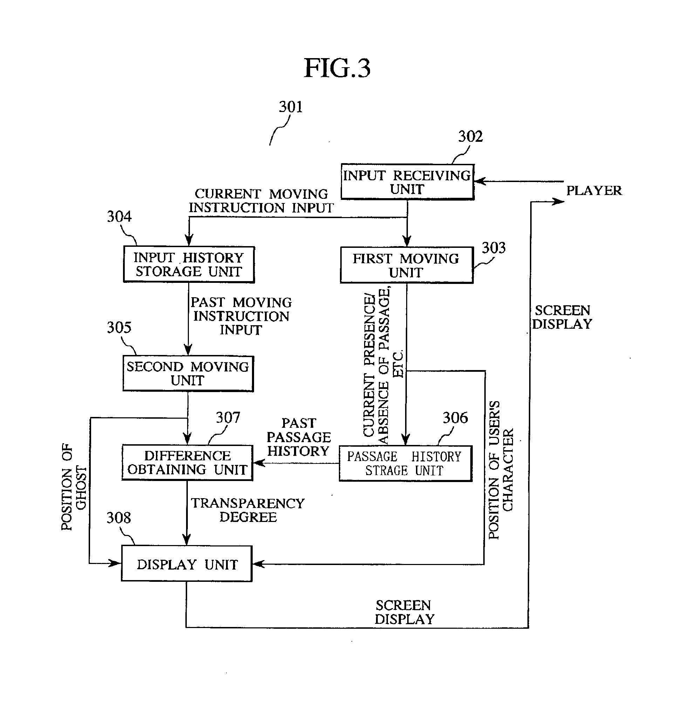

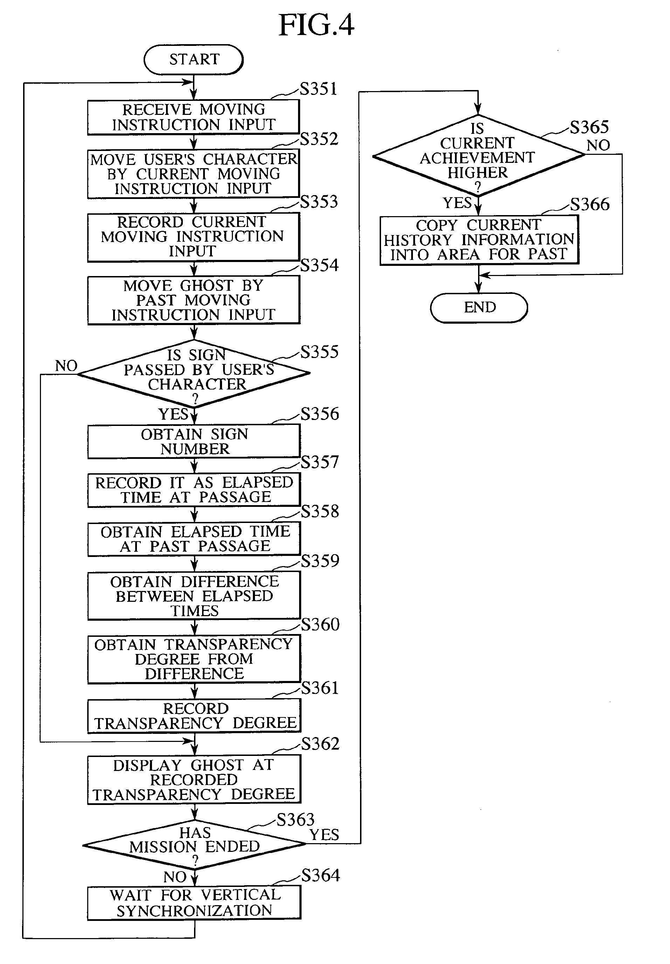

FIG. 3 is an exemplary diagram showing a schematic structure of a game device according to one embodiment of the present invention. The present game device is realized on the above-described information processing device 100. On the other hand, FIG. 4 is a flowchart showing the flow of control of a game control process performed by the game device. The following explanation will be given with reference to these diagrams.

A mode in which a two-dimensional plane where there exist ups and downs for a car race is employed as a virtual space and the state captured from a virtual vehicle-mounted camera fixed on a car, as the user's character, is displayed on the screen, will be explained below.

The game device 301 according to the present embodiment comprises an input receiving unit 302, a first moving unit 303, an input history storage unit 304, a second moving unit 305, a passage history storage unit 306, a difference obtaining unit 307, and a display unit 308.

When the present game control process is started, the input receiving unit 302 of the game device 301 receives a moving instruction input which instructs to move the user's character in the virtual space (step S351). In the above-described information processing device 100, the controller 105 functions as the input receiving unit 302, but a controller having another shape such as a steering wheel, an accelerator, a brake, a lever of various types, etc., may be used or an input device such as a keyboard and a mouse used for an ordinary computer may be used as the input receiving unit 302.

The received moving instruction input is expressed by a set of parameters of operation states of the controller 105, such as the states of the pressing operation on each button (may include whether it is pressed or untouched, and the level of the pressing force), the direction in which the joysticks are bent and the level of bending, etc.

Next, the first moving unit 303 moves the user's character in the virtual space, in response to the moving instruction input received by the input receiving unit 302 (step S352). Such an input manner is often used that the user's character is moved in the direction in which the arrow buttons 201 to 204 of any type or the joysticks 213 and 214 are operated, but it is possible to arbitrarily change which buttons, etc. of the controller 105 are used for what kinds of functions, depending on the contents of the games.

According to the present embodiment, steering wheel operations are performed by the joystick 213 and braking operations are performed by the joystick 214 respectively.

Since the present embodiment relates to a car game, a controller of any shapes among a steering wheel, a brake, an accelerator, a shifter, etc. is used as the input receiving unit 302, and the car in the virtual space is operated and the user's character is moved with the use of the states (parameters such as position, inclination, etc.) of operations on these. Information regarding the user's character, such as the position in the virtual space, etc. is stored in a predetermined area in the RAM 103 appropriately.

Thus, the CPU 101 functions as the first moving unit 303 in cooperation with the controller 105.

Further, the input history storage unit 304 stores the moving instruction input received by the input receiving unit 302 as input history information (step S353).

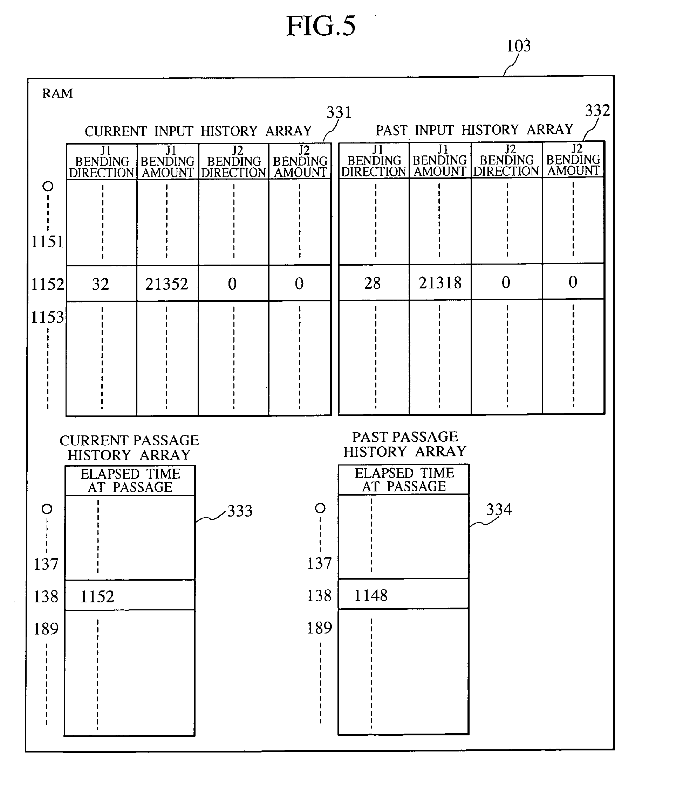

According to the present embodiment, the quotient obtained by dividing the time that has elapsed since the current mission started by the cycle (about 1/60 second) of vertical synchronization interrupts is considered as "elapsed time". FIG. 5 is an explanatory diagram showing the state of history information stored in the RAM 103.

Input history information is stored in a current input history array 331. The subscripts on the current input history array 331 correspond to the aforementioned "elapsed time". All of the input parameters of the controller 105 used for operating the user's character at step S352 can be stored for each element of the current input history array 331. According to the present embodiment, the bending direction and bending amount of the joystick 213 and the bending direction and bending amount of the joystick 214 are to be stored for the elements of the current input history array 331. According to the present embodiment, the bending direction, which indicates by how many degrees the joystick is rotated in the anticlockwise direction, where the upper direction is the reference direction, is stored in the range of -180° to +180°, and the bending amount is recorded in the range of 0 to 32767.

In the present diagram, recorded at the 1152nd element are that the bending of the joystick 213 (corresponding to a steering wheel) is 32 degrees in the leftward direction (J1 bending direction) and the bending level is 21352 (J1 bending amount), and the bending direction of the joystick 214 (corresponding to a brake) is 0 degree (J2 bending directioin) and the bending level thereof is 0 (J2 bending amount). This means that the steering wheel is turned to the left with no braking.

A past input history array 332 is also prepared in the RAM 103. The past input history array 332 has the same structure as the current input history array 331, but is different in that input history information (typically of the mission in which the best achievement was attained) obtained in a past game play is stored therein.

The second moving unit 305 moves the ghost in the virtual space, based on a moving instruction input stored in the input history storage unit 304 in the past as input history information, i.e., a moving instruction input stored in the past input history array 332 (step S354).

In a case where, as assumed in the above-described example, the information regarding the joysticks 213 and 214 is recorded at the 1152nd element at step S353 in the current repeating unit (as illustrated, this process has a repeating structure), the ghost is moved at step S354 with the use of the values (in the present diagram, 28, 21318, 0, and 0) recorded at the 1152nd element of the past input history array 332. Usage of the parameters and various calculations in moving the ghost are equal to those by the first moving unit 303.

The RAM 103, in which the current input history array 331 and the past input history array 332 are secured in this manner, functions as the input history storage unit 304 under the control of the CPU 101.

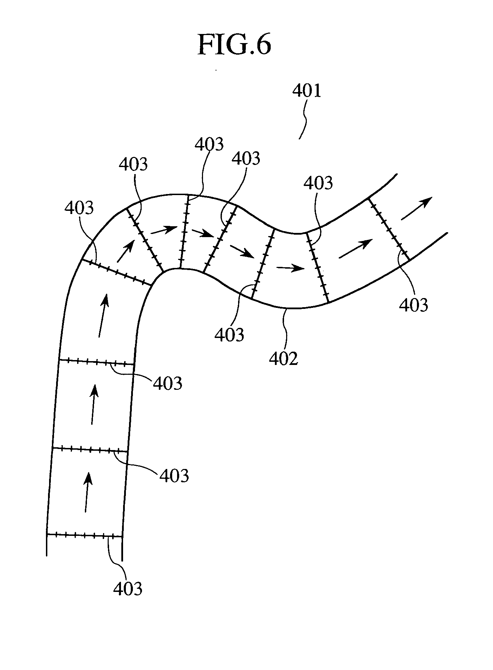

Then, the CPU 101 determines whether or not the user's character has passed a sign set beforehand in the virtual space (step S355). FIG. 6 is an explanatory diagram showing the state where signs are placed in the virtual space, according to the game device of the present embodiment.

For example, in case of a car race game, since the start of a mission corresponds to the departure of the car from the start line and the end of the mission corresponds to the arrival at the goal in time after some rounds on the course, the position of the car can be identified by the "distance" from the start line, unless the car goes greatly astray from the course. Hence, signs are placed so as to cross the course (so as to be substantially perpendicular to the direction in which the car advances) at substantially equal intervals.

In a virtual space 401, a plurality of signs 403 are placed on a road 402 where it is assumed that the user's character will run, so as to cross the road 402 (so as to be perpendicular to the arrows indicating the direction in which the user's character runs). These signs 403 are assigned numbers in the order of passage therethrough, and the CPU 101 monitors the changes of the position of the user's character to determine whether or not the user's character has passed any sign 403.

The user's character is moved at step S352 as described above and its position is updated. In a case where the line that connects the position of the user's character before updated and the position thereof after updated has an intersection with the line indicating a sign 403, this means that the sign 403 has been passed.

It is preferred that the interval between the signs 403 should be sufficiently short. For example, if the signs 403 are so placed as to be closer to each other than a length obtained by multiplying the maximum velocity assumed for the user's character by the interval between vertical synchronization interrupts, the number of signs which are to be passed in a given repeating unit is one at the maximum. Needless to say, the interval may be set wider than this depending on the purpose.

Further, in case of a car race, the same course are to be run many times. Even the same sign 403 placed at the same position is treated as a different sign 403 if the rounds are different.

Other than the above, in a case where the virtual space is a three-dimensional space and the user's character flies across the sky or goes in the water, a method of using circles as signs can be employed. Specifically, this is a method of arranging circles in an order along an assumed course, and regarding the user's character as having passed the sign in a case where a line indicating the change of the position of the user's character passes a circle (in a case where the line intersects the plane on which the circle is placed and the distance between the center of the circle and the intersection is smaller than the radius of the circle).

In a case where the user's character has passed none of the signs 403 (step S355; No), the flow goes to step S362. On the other hand, in a case where it is determined that the user's character has passed a sign (step S355; Yes), the passage history storage unit 306 obtains a sign of what ordinal number has been passed (step S356), associates the current "elapsed time" with that sign, and stores them as passage history information (step S357).

As shown in FIG. 5, a current passage history array 333 is also prepared in the RAM 103. This is for recording the "elapsed time" at which the user's character added the sign 403 in the current mission.

According to the present embodiment, in a case where the "elapsed time" in the current repeating unit is 1152 as described above, if it is determined that the sign at the 138th order has been passed, a value 1152 is written at the 138th element of the current passage history array 333.

As shown in FIG. 5, a past passage history array 334 is also prepared in the RAM 103. An "elapsed time" at which the user's character passed each sign 403 in a past mission (the same mission as that whose input history information is recorded in the past input history array 332) is recorded in the past passage history array 334.

In this manner, the RAM 103 also functions as the passage history storage unit 306 in cooperation with the CPU 101, etc.

In a case where the "elapsed time" at which any given sign 403 is passed is recorded at step S357, the difference obtaining unit 307 obtains the "elapsed time" recorded in the past passage history array 334 for the same sign 403 (step S358). In the example shown in the present diagram, the value at the 138th element of the past passage history array 334 is 1148.

Then, the difference obtaining unit 307 obtains the difference between both the "elapsed times" (step S359). In case of the current repeating unit of the present embodiment, 1152-1148 = +4 is the difference between the elapsed times. It is arbitrarily selectable depending on the purpose, from which of them the other is subtracted, or whether to consider the subtraction result inclusive of whether it is positive or negative or to disregard the symbol.

In this manner, the CPU 101 functions as the difference obtaining unit 307 in cooperation with the RAM 103.

Then, the CPU 101 obtains a transparency degree for displaying the ghost, from a predetermined association relationship between difference and transparency degree (step S360), stores it in a predetermined α value area in the RAM 103 (step S361), and goes to step S362.

Note that appropriate initial values are pre-stored in respective areas in addition to the predetermined α value area in the RAM 103 before the present process is started, but description of this process is omitted in the present diagram to facilitate understanding.

The association relationship between difference and transparency degree can be determined arbitrarily, but it is generally preferred that the transparency increase (the ghost be displayed more transparently) as the absolute value of the difference is smaller and the opaqueness increase (the ghost be displayed more clearly) as the absolute value of the difference is larger.

Since it is a customary practice not to perform collision determination between the user's character and its ghost, the ghost and the user's character overlap each other in a great part of them in a case where the achievement of the ghost and the achievement of the user's character are almost the same. In such a case, it might become difficult to observe how the external world is or how the other opponents are, because only the ghost is displayed (though semi-transparently) in the screen. On the other hand, in a case where the achievements differ (particularly, in a case where the ghost precedes), it is often desired that the ghost can be observed well because it might be desired to see the ghost as an objective.

Then, the display unit 308 displays the ghost in the virtual space at the transparency degree stored in the predetermined α value area of the RAM 103 (step S362). In the present embodiment, ordinarily used three-dimensional graphics techniques for car race games are used for those other than setting the transparency degree of the ghost.

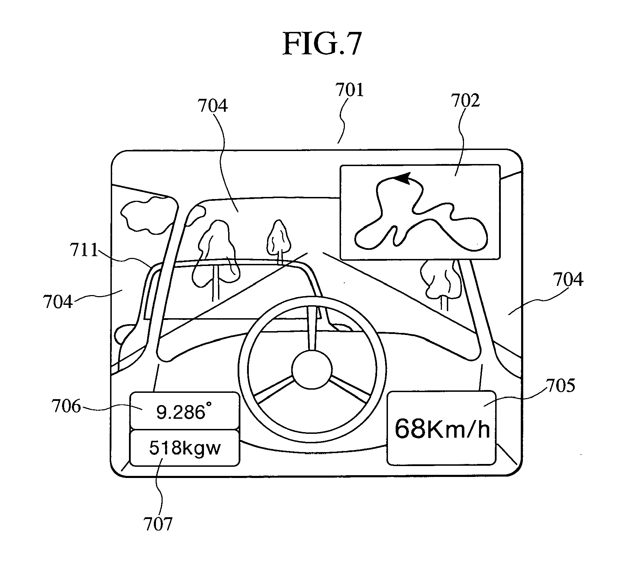

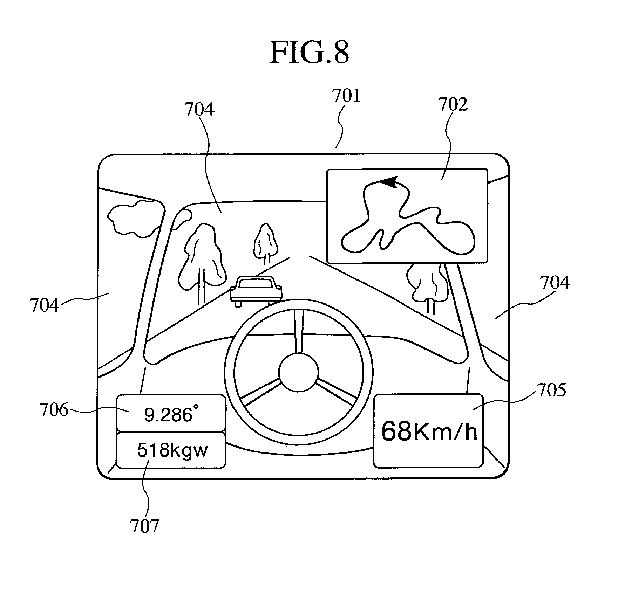

FIG. 7 and FIG. 8 are exemplary diagrams showing the states of the screen display according to the present embodiment, which correspond to the states of the external world seen from a camera which moves together with the user's character. This is the same as capturing the external world by a vehicle-mounted camera in a car race game and displaying it, or displaying the virtual three-dimensional space on a two-dimensional screen by three-dimensional graphics techniques.

In FIG. 7, the ghost 711 is displayed transparently in the screen 701, because the elapsed times at which the user's character and the ghost passed the last sign are similar (the difference is small). That is, it is displayed such that the background is seen therethrough.

In FIG. 8, the ghost 711 is displayed clearly in the screen 701, because the elapsed times at which the user's character and the ghost passed the last sign differ (the difference is large). That is, the ghost 711 hides the background.

As described above, since the ghost is displayed more transparently by increasing the transparency degree in a case where the elapsed times of the user's character and the ghost are similar while the ghost is displayed more clearly by reducing the transparency degree in a case where the elapsed times differ, it is possible to show the ghost and objects other than the ghost to the player in an easy-to-observe manner, depending on the situations.

Then, it is determined whether or not the current mission has ended (step S363), and if the current mission has not ended (step S363; No), the flow returns to step S351 after a vertical synchronization interrupt is waited for (step S364). On the other hand, in a case where the current mission has ended (step S363; Yes), the achievements of the user's character and ghost in the current mission are compared (step S365). In a case where the achievement of the user's character is higher (step S365; Yes), the content in the current input history array 331 is copied into the past input history array 332 and the content in the current passage history array 333 is copied into the past passage history array 334 (step S366) to prepare for the next play and thereafter, and the present process is terminated.

On the other hand, in a case where the achievement of the ghost is higher (step S365; No), the present process is terminated without performing the copying.

In the copying, the achievements may not simply be compared but the player may be asked whether to copy or not. It is also possible to employ a method of preparing plural sets of past input history arrays 332 and past passage history arrays 334 and asking in which of them to store, or storing them all for the latest some missions. Or it is also possible to combine these appropriately. In a case where there exist plural sets of past histories, it is also possible to employ a method of asking the player which is to be the ghost before the mission starts, or adopting all as the ghosts.

Because of this, the operation history (typically, with the highest achievement) of the past self of the player (or another person) is reproduced as the ghost, and it becomes possible to easily determine whether or not the achievement improves even during the play, by seeing the transparency degree of the ghost.

Other than the above, it is also possible to employ a method of shifting the hue of the ghost in displaying the ghost. For example, the hue of the ghost is changed depending on the difference between the elapsed time of the ghost and of the user's character. Though it is typical that the hue change is increased as the difference is greater (as the achievements differ more greatly), it is also possible to employ an inverse association. In this case, it is also possible to previously arrange the association such that the direction in which the amount of hue is shifted changes when the difference changes from positive to negative.

For example, in a case where the ghost precedes the user's character, i.e., in a case where the elapsed time of the ghost is shorter than the elapsed time of the user's character, the difference is positive if a plain subtraction is performed, while in a case where the user's character precedes the ghost, the difference is negative. Hence, for example, the hue is shifted in a redder direction in a case where the difference is a positive value, and the hue is shifted in a bluer direction in a case where the difference is a negative value. Also in this case, the ghost is displayed semi-transparently.

By doing so, it is possible to show to the player in an easy-to-understand manner whether the user's character precedes or the ghost precedes, by the changes in the hue of the ghost.

The present application claims priority based on Japanese Patent Application No 2004-140694, the content of which is incorporated herein in its entirety.

### Industrial Applicability

As explained above, according to the present invention, it is possible to provide a game device and game control method suitable for showing a past operation history to a player in comparison with the current operation status, a computer-readable information recording medium storing a program for realizing these on a computer, and the program, and to apply these to realizing various competition games, etc. in a game device and to virtual reality techniques for providing various virtual experiences for educational purposes, etc.

## Claims

1. A game device (301), comprising:
an input receiving unit (302) which receives a moving instruction input for instructing to move a first object in a virtual space;
a first moving unit (303) which moves said first object in said virtual space, by the moving instruction input received by said input receiving unit (302);
an input history storage unit (304) which stores the moving instruction input received by said input receiving unit (302) as input history information;
a second moving unit (305) which moves a second object in said virtual space, by a moving instruction input stored in a past in said input history storage unit (304) as input history information;
a passage history storage unit (306) which stores an elapsed time at which said first object passes each of a plurality of signs arranged in said virtual space, as passage history information;
a difference obtaining unit (307) which obtains an elapsed time at which said second object passes a sign from passage history information stored in a past in said passage history storage unit (306) each time said first object passes each of the plurality of signs, and obtains a difference between the elapsed time of said first object and the elapsed time of said second object; and
a display unit (308) which displays said second object in said virtual space at a transparency degree pre-associated with the difference obtained by said difference obtaining unit (307).

2. The game device (301) according to claim 1,
wherein pre-association is made such that as an absolute value of the difference obtained by said difference obtaining unit (307) increases, the transparency degree decreases.

3. The game device (301) according to claim 1,
wherein said display unit (308) further displays said second object in said virtual space by shifting a hue thereof by an amount pre-associated with the difference obtained by said difference obtaining unit (307).

4. The game device (301) according to claim 3,
wherein pre-association is made such that a direction in which the amount of the hue is shifted changes when the difference obtained by said difference obtaining unit (307) changes from positive to negative.

5. The game device (301) according to claim 1,
wherein said display unit (308) uses, as a position at which said second object is to be displayed, a position at which said second object is when seen from a viewpoint which moves in said virtual space in conjunction with said first object.

6. A game control method involving use of an input history storage unit and a passage history storage unit, comprising:
an input receiving step of receiving a moving instruction input for instructing to move a first object in a virtual space;
a first moving step of moving said first object in said virtual space, by the moving instruction input received at said input receiving step;
an input history storing step of storing the moving instruction input received at said input receiving step in said input history storage unit as input history information;
a second moving step of moving a second object in said virtual space, by a moving instruction input stored in a past in said input history storage unit as input history information;
a passage history storing step of storing an elapsed time at which said first object passes each of a plurality of signs arranged in said virtual space in said passage history storage unit as passage history information;
a difference obtaining step of obtaining an elapsed time at which said second object passes a sign from passage history information stored in a past in said passage history storage unit each time said first object passes each of the plurality of signs, and obtaining a difference between the elapsed time of said first object and the elapsed time of the second object; and
a displaying step of displaying said second object in said virtual space at a transparency degree pre-associated with the difference obtained at said difference obtaining step.

7. A computer-readable information recording medium storing a program for controlling a computer to function as:
an input receiving unit (302) which receives a moving instruction input for instructing to move a first object in a virtual space;
a first moving unit (303) which moves said first object in said virtual space, by the moving instruction input received by said input receiving unit (302);
an input history storage unit (304) which stores the moving instruction input received by said input receiving unit (302) as input history information;
a second moving unit (305) which moves a second object in said virtual space, by a moving instruction input stored in a past in said input history storage unit (304);
a passage history storage unit (306) which stores an elapsed time at which said first object passes each of a plurality of signs arranged in said virtual space, as passage history information;
a difference obtaining unit (307) which obtains an elapsed time at which said second object passes a sign from passage history information stored in a past in said passage history storage unit (306) each time said first object passes each of the plurality of signs, and obtains a difference between the elapsed time of said first object and the elapsed time of said second object; and
a display unit (308) which displays said second object in said virtual space at a transparency degree pre-associated with the difference obtained by said difference obtaining unit (307).

8. A program for controlling a computer to function as:
an input receiving unit (302) which receives a moving instruction input for instructing to move a first object in a virtual space;
a first moving unit (303) which moves said first object in said virtual space, by the moving instruction input received by said input receiving unit (302);
an input history storage unit (304) which stores the moving instruction input received by said input receiving unit (302) as input history information;
a second moving unit (305) which moves a second object in said virtual space, by a moving instruction input stored in a past in said input history storage unit (304) as input history information;
a passage history storage unit (306) which stores an elapsed time at which said first object passes each of a plurality of signs arranged in said virtual space, as passage history information;
a difference obtaining unit (307) which obtains an elapsed time at which said second object passes a sign from passage history information stored in a past in said passage history storage unit (306) each time said first object passes each of the plurality of signs, and obtains a difference between the elapsed time of said first object and the elapsed time of said second object; and
a display unit (308) which displays said second object in said virtual space at a transparency degree pre-associated with the difference obtained by said difference obtaining unit (307).
